(19) **Europäisches Patentamt**
**European Patent Office**
**Office européen des brevets**

(11) **EP 4 083 735 B1**

(12) **EUROPÄISCHE PATENTSCHRIFT**

(45) Veröffentlichungstag und Bekanntmachung des Hinweises auf die Patenterteilung:
**24.07.2024 Patentblatt 2024/30**

(21) Anmeldenummer: **21170350.9**

(22) Anmeldetag: **26.04.2021**

(51) Internationale Patentklassifikation (IPC):
***G05D 1/00*** *(2024.01)*

(52) Gemeinsame Patentklassifikation (CPC):
**G05D 1/0033**

(54) **VERFAHREN UND VORRICHTUNG FÜR TELEOPERIERTES FAHREN**

METHOD AND DEVICE FOR REMOTE DRIVING

PROCÉDÉ ET DISPOSITIF DE CONDUITE TÉLÉOPÉRÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.11.2022 Patentblatt 2022/44**

(73) Patentinhaber: **Robert Bosch GmbH**
**70442 Stuttgart (DE)**

(72) Erfinder:
- **Engel, Peter**
  **31840 Hessisch Oldendorf (DE)**
- **Geraldy, Alexander**
  **31141 Hildesheim (DE)**
- **Wette, Philip**
  **31675 Bueckeburg (DE)**
- **Wolter, Jan**
  **30173 Hannover (DE)**

(56) Entgegenhaltungen:
**WO-A1-2020/200602       WO-A2-2009/136969**
**US-A1- 2020 324 761**

- **HOSSEINI AMIN ET AL: "Predictive Haptic Feedback for Safe Lateral Control of Teleoperated Road Vehicles in Urban Areas", 2016 IEEE 83RD VEHICULAR TECHNOLOGY CONFERENCE (VTC SPRING), IEEE, 15 May 2016 (2016-05-15), pages 1 - 7, XP032918665, DOI: 10.1109/VTCSPRING.2016.7504430**

**Beschreibung**

Stand der Technik

Die Erfindung betrifft ein Verfahren und eine Vorrichtung für teleoperiertes Fahren.

WO 2009/136969 A2 offenbart bereits ein Verfahren für teleoperiertes Fahren gemäß dem Oberbegriff von Patentanspruch 1. Teleoperiertes Fahren beschreibt die Aufgabe, ein Fahrzeug jeglicher Art aus der Ferne in Echtzeit zu steuern. Dazu kommuniziert das Fahrzeug mit einer Steuereinrichtung. Das Fahrzeug und die Steuereinrichtung sind dabei voneinander entfernt. Durch die Entfernung entstehen Latenzen.

Das Ansteuern in Echtzeit kann aufgrund von Latenzen erschwert oder unmöglich sein.

HOSSEINI AMIN ET AL: "Predictive Haptic Feedback for Safe Lateral Control of Teleoperated Raad Vehicles in Urban Areas", 2016 IEEE 83RD VEHICULAR TECHNOLOGY CONFERENCE (VTC SPRING) offenbart ein System, mit dem die Tele-Gegenwart eines menschlichen Fahrers durch haptische Interaktion mit der Fahrzeugumgebung erhöht werden soll. Dabei wird ein zweistufiger prädiktiver Ansatz verfolgt, mit dem die Zeitverzögerung bei der Kommunikation zwischen dem Fahrzeug und dem Fahrerarbeitsplatz kompensiert werden soll und zudem der Fahrer auch vor einer Gefahr gewarnt und bei der Vermeidung einer Kollision unterstützt werden soll.

US 2020/324761 A1 offenbart, dass beim teleoperierten Fahren eine Geschwindigkeitsgrenze bestimmt wird, bei der das Fahrzeug sicher teleoperiert werden kann. Ein Sicherheitssystem erfasst die Daten der Fahrzeugumgebung und erzeugt eine Karte mit Tiefen (LIDAR, Radar, Sonar, Stereo Kamera). Aus der Karte können Hindernisse in der Umgebung des Fahrzeugs identifiziert werden.

Offenbarung der Erfindung

Das Verfahren und die Vorrichtung gemäß den unabhängigen Ansprüchen verbessert die Ansteuerung des Fahrzeugs aus der Ferne in Echtzeit bei Latenz oder ermöglicht diese erst.

Die Erfindung ist im Anspruch 1 definiert. Die erste Vorhersage bildet eine Grundlage für die zweite Vorhersage wobei in die zweite Vorhersage, wenn möglich, auch neue echte Daten einfließen. Dies verbessert die zweite Vorhersage. Die erste Vorhersage kann durch Abbilden von empfangener Information zuvor bestimmt worden sein, oder durch Abbilden von empfangener Information und anderen Vorhersagen. Dadurch werden die Fahrzeugdaten, die mit hoher Latenz für die zweite Vorhersage zu spät eintreffen, durch die erste Vorhersage ersetzt und die Fahrzeugdaten, die mit geringer Latenz und rechtzeitig eintreffen, nicht durch die erste Vorhersage ersetzt. Die echten Fahrzeugdaten verbessern die zweite Vorhersage.

Es kann vorgesehen sein, dass die Information über den Zustand und/oder die Umgebung des Fahrzeugs, die erste Vorhersage und eine Eingabe eines Nutzers zum teleoperierten Fahren des Fahrzeugs durch die Abbildung auf die zweite Vorhersage abgebildet werden. Die Eingabe des Nutzers ermöglicht eine bessere Prädiktion des zukünftigen Verhaltens des Fahrzeugs, da davon auszugehen ist, dass sich das Fahrzeug entsprechend der Eingabe verhalten wird.

Die Eingabe des Nutzers wird vorzugsweise in Erwiderung auf eine Ausgabe einer Vorhersage erfasst. Der Nutzer reagiert dadurch auf die Vorhersage. Bei großer Latenz in einer Übertragung der echten Information vom Fahrzeug wird das teleoperierte Fahren dadurch genauer, als wenn der Zustand des Fahrzeugs und/oder die Umgebung des Fahrzeugs dem Nutzer nur in Form von bereits erhaltenen echten Fahrzeugdaten angezeigt wird.

Die Eingabe des Nutzers kann eine Soll-Geschwindigkeit, eine Soll-Beschleunigung, einen Soll-Lenkwinkel und/oder eine Soll-Gierrate, eine Soll-Pedalposition, einen Soll-Gang, ein Soll-Motormoment und/oder eine Soll-Motordrehzahl vorgeben.

Die Information über den Zustand und/oder die Umgebung des Fahrzeugs wird beispielsweise für mehrere verschiedene Zeitpunkte vom Fahrzeug empfangen, wobei die Information über den Zustand und/oder die Umgebung des Fahrzeugs für die mehreren verschiedenen Zeitpunkte durch die Abbildung auf die zweite Vorhersage abgebildet wird. Dies verbessert die zweite Vorhersage.

Die Eingabe des Nutzers wird beispielsweise für mehrere verschiedene Zeitpunkte erfasst, wobei die Eingabe für die mehreren verschiedenen Zeitpunkte durch die Abbildung auf die zweite Vorhersage abgebildet wird. Dies verbessert die zweite Vorhersage zusätzlich.

Die Vorrichtung zum teleoperierten Fahren des Fahrzeugs ist ausgebildet, das jeweilige Verfahren auszuführen.

Weitere vorteilhafte Ausführungsformen ergeben sich aus der folgenden Beschreibung und der Zeichnung. In der Zeichnung zeigt:

Fig. 1     ein System zum teleoperierten Fahren,
Fig. 2     ein Verfahren zum teleoperierten Fahren,
Fig. 3     ein Einrichtung zur Prädiktion von Datenframes,
Fig. 4     ein Beispiel für eine Prädiktion.

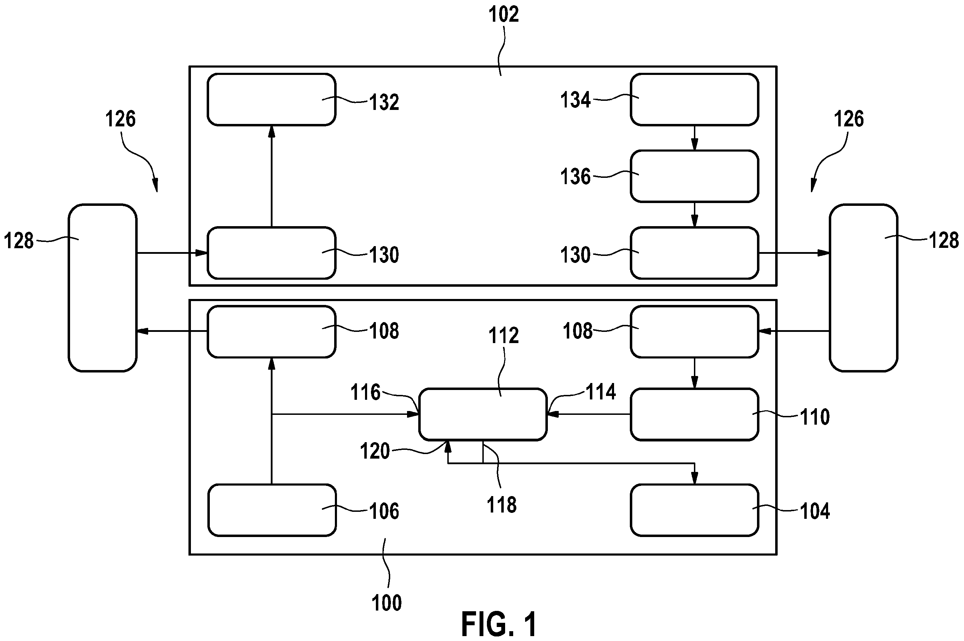

Figur 1 stellt ein System zum teleoperierten Fahren durch einen im Folgenden als Operator bezeichneter Nutzer schematisch dar. Das System umfasst eine Mensch-Maschine-Schnittstelle 100 und ein Fahrzeug 102. Die Mensch-Maschine-Schnittstelle 100 wird im Folgenden als Arbeitsplatz 100 bezeichnet. Der Arbeitsplatz 100 ist vom Fahrzeug 102 entfernt angeordnet. Der Arbeitsplatz 100 ist außerhalb des Fahrzeugs 102 angeordnet.

Der Arbeitsplatz 100 umfasst eine Anzeige 104, eine Eingabeeinrichtung 106, eine Kommunikationseinrichtung 108, eine Dekodiereinrichtung 110. Die Kommunikationseinrichtung 108 ist ausgebildet, einen ersten Paketstrom zu empfangen. Die Kommunikationseinrichtung 108 ist ausgebildet, aus dem ersten Paketstrom einen ersten Datenstrom zu bestimmen. Die Dekodiereinrichtung 110 ist ausgebildet, aus dem ersten Datenstrom Datenframes zu bestimmen. Ein Datenframe kann Daten eines Bildes umfassen, das auf der Anzeige 104 wiedergebbar ist. Die Dekodiereinrichtung 110 ist ausgebildet, eine Mehrzahl von Datenframes zu empfangen und ein Bild abhängig von der Mehrzahl der Datenframes zu bestimmen. Das Bild kann ein Videobild sein. Die Datenframes können mit einem Codec komprimierte Videodaten umfassen. Die Dekodiereinrichtung 110 kann ausgebildet sein, aus den Datenframes ein Audiosignal zu bestimmen, das insbesondere synchron zur Anzeige des Videobildes über einen nicht in Figur 1 dargestellten Lautsprecher ausgebbar ist. Die Datenframes können zudem Information über einen Zustand des Fahrzeugs 102 umfassen. Die Dekodiereinrichtung 110 kann ganz oder Teilweise als spezifische Hardware implementiert sein. Der Arbeitsplatz 100 umfasst im Beispiel eine Einrichtung 112 zur Vorhersage von Datenframes. Die Einrichtung ist eine Implementierung eines künstlichen neuronalen Netzwerks. Das künstliche neuronale Netzwerk kann ganz oder Teilweise als spezifische Hardware implementiert sein.

Die Eingabeeinrichtung 106 ist ausgebildet, aus der Eingabe des Operators einen zweiten Datenstrom zu bestimmen. Der zweite Datenstrom umfasst im Beispiel Datensätze, die abhängig von der Eingabe des Operators bestimmt werden. Die Kommunikationseinrichtung 108 ist ausgebildet, aus dem zweiten Datenstrom den zweiten Paketstrom zu bestimmen.

Die Einrichtung 112 zur Vorhersage von Datenframes weist im Beispiel einen ersten Eingang 114, einen zweiten Eingang 116, einen Ausgang 118 und einen dritten Eingang 120 auf. Der erste Eingang 114 ist ein Eingang für einen Datenframe oder mehrere Datenframes aus der Dekodiereinrichtung 110. Der zweite Eingang 116 ist ein Eingang für einen Datensatz oder mehrere Datensätze aus dem zweiten Datenstrom. Der Ausgang 118 ist ein Ausgang für einen prädizierten Datenframe oder mehrere prädizierte Datenframes. Der dritte Eingang 120 ist ein Eingang für einen, von der Einrichtung 112 zur Vorhersage von Datenframes prädizierten Datenframe oder mehrere von dieser prädizierten Datenframes auf. Es ist vorgesehen, dass abhängig von einem Datenframe am ersten Eingang 114, einem Datensatz am zweiten Eingang 116 und einem prädizierten Datenframe am dritten Eingang 120 ein prädizierter Datenframe am Ausgang 118 ausgegeben wird.

Das System ist zur Datenübertragung über ein Kommunikationsnetzwerk 126 ausgebildet. Im Beispiel ist das Kommunikationsnetzwerk 126 zur paketvermittelten Kommunikation ausgebildet. Das Kommunikationsnetzwerk 126 kann eine drahtlose Kommunikation zwischen dem Fahrzeug 102 und einem Zugangspunkt 128 vorsehen. Der Zugangspunkt 128 kann über ein drahtgebundenes Netzwerk mit dem Arbeitsplatz 100 verbunden sein. Das Kommunikationsnetzwerk 126 ist im Beispiel ausgebildet, den ersten Paketstrom paketvermittelt zu übertragen. Das Kommunikationsnetzwerk 126 ist im Beispiel ausgebildet, den zweiten Paketstrom paketvermittelt zu übertragen.

Das Fahrzeug 102 umfasst eine Kommunikationseinrichtung 130. Die Kommunikationseinrichtung 130 ist im Beispiel ausgebildet, den ersten Paketstrom zu senden. Die Kommunikationseinrichtung 130 ist im Beispiel ausgebildet, den zweiten Paketstrom zu empfangen.

Die Kommunikationseinrichtung 130 ist im Beispiel ausgebildet, abhängig vom zweiten Paketstrom einen dritten Datenstrom zu erzeugen. Das Fahrzeug 102 umfasst eine Aktorik 132. Die Aktorik 132 ist ausgebildet, das Fahrzeug 102 abhängig vom dritten Datenstrom anzusteuern. Der dritte Datenstrom umfasst im Beispiel die Datensätze aus dem zweiten Datenstrom, die abhängig von der Eingabe des Operators bestimmt werden. Die Aktorik 132 kann ausgebildet sein, einen Motor, eine Servolenkung oder Bremsen des Fahrzeugs 102 anzusteuern.

Das Fahrzeug 102 umfasst im Beispiel eine Sensorik 134. Die Sensorik 134 ist ausgebildet, eine Wirkung der Ansteuerung des Fahrzeugs 102 durch einen Fahrer und/oder den Operator zu erfassen. Die Sensorik 134 ist im Beispiel ausgebildet, Information über eine Umgebung des Fahrzeugs 102 zu erfassen.

Die Sensorik 134 ist ausgebildet, Datenframes für einen vierten Datenstrom zu bestimmen. Das Fahrzeug 102 umfasst im Beispiel eine Kodiereinrichtung 136, die ausgebildet, den vierten Datenstrom aus den Datenframes von der Sensorik 134 zu bestimmen. Die Kommunikationseinrichtung 130 ist im Beispiel ausgebildet, den ersten Paketstrom abhängig vom vierten Datenstrom zu erzeugen.

Die Sensorik 134 kann eine Kamera umfassen. Ein Datenframe kann Daten eines Bildes umfassen, das von der Kamera erfasst wurde. Die Kodiereinrichtung 136 kann ausgebildet sein, eine Mehrzahl von Bildern zu empfangen und einen Datenframe abhängig von der Mehrzahl der Bilder zu bestimmen. Das Bild kann ein Videobild sein. Die Datenframes können die mit dem Codec komprimierten Videodaten umfassen. Die Sensorik 134 kann ein in Figur 1 nicht dargestelltes Mikrofon umfassen, das ausgebildet ist, das Audiosignal zu erfassen. Die Kodiereinrichtung 136 kann ausgebildet sein, die Datenframes mit dem Audiosignal zu bestimmen, das insbesondere synchron zur Erfassung des Videobildes erfasst wird. Die Datenframes können zudem eine Information über einen Zustand des Fahrzeugs 102 umfassen. Die Information über den Zustand des Fahrzeugs 102 kann eine Geschwindigkeit, eine Beschleunigung, einen Lenkwinkel und/oder eine Gierrate umfassen. Die Information über den Zustand des Fahrzeugs 102 kann eine Pedalposition, einen Gang, ein Motormoment und/oder eine Motordrehzahl umfassen. Die Kodiereinrichtung 136 kann ganz oder Teilweise als spezifische Hardware implementiert sein.

Der Arbeitsplatz 100 kann wie das Fahrzeug 102 ausgebildet sein. Beispielsweise umfasst der Arbeitsplatz 100 einen Nachbildung eines Cockpits des Fahrzeugs 102 oder eines generischen Fahrzeugs. Die Eingabe des Operators wird beispielsweise an einem Lenkrad, einem Gaspedal, einen Bremspedal und/oder einem Gangwahlhebel erfasst. Es kann auch ein Joystick oder eine Tastatur oder eine Spracheingabe vorgesehen sein. Der Arbeitsplatz 100 ist in einem Aspekt ausgebildet, eine Soll-Geschwindigkeit, eine Soll-Beschleunigung, einen Soll-Lenkwinkel und/oder eine Soll-Gierrate abhängig von der Eingabe vorzugeben. Die Eingabe des Operators kann beispielsweise eine Soll-Pedalposition, einen Soll-Gang, ein Soll-Motormoment und/oder eine Soll-Motordrehzahl umfassen. Der Arbeitsplatz 100 ist in einem Aspekt ausgebildet, die Soll-Geschwindigkeit, die Soll-Beschleunigung, den Soll-Lenkwinkel und/oder die Soll-Gierrate zudem abhängig von der Information über den Zustand des Fahrzeugs 102 und/oder abhängig von der Information über die Umgebung des Fahrzeugs 102 vorzugeben.

Im Beispiel umfasst ein Datenframe die Information über den Zustand des Fahrzeugs 102 und die Information über die Umgebung des Fahrzeugs 102. Die Kommunikationseinrichtungen können ausgebildet sein, die Information über den Zustand des Fahrzeugs 102 zusätzlich zu und unabhängig von den Datenframes zu übertragen, mit denen die Information über die Umgebung des Fahrzeugs 102 übertragen wird. In diesem Fall kann ein Zeitstempel in den Datenframes vorgesehen sein, mit dem die Datenframes einander zeitlich zuordenbar sind.

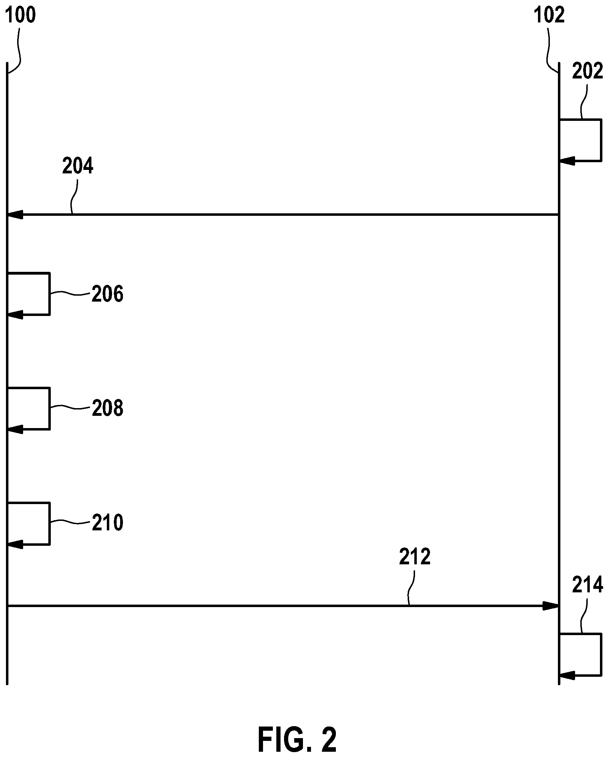

In Figur 2 ist ein Verfahren zum teleoperierten Fahren schematisch dargestellt.

In einem Schritt 202 wird die Information über die Umgebung des Fahrzeugs 102 und die Information über den Zustand des Fahrzeugs 102 erfasst.

Anschließend wird ein Schritt 204 ausgeführt.

Im Schritt 204 wird die Information über die Umgebung des Fahrzeugs 102 und die Information über den Zustand des Fahrzeugs 102 vom Fahrzeug 102 an den Arbeitsplatz 100 übertragen.

Anschließend wird ein Schritt 206 ausgeführt.

Im Schritt 206 wird abhängig von der Information über die Umgebung des Fahrzeugs 102 und der Information über den Zustand des Fahrzeugs 102 eine Vorhersage für den Zustand und/oder die Umgebung des Fahrzeugs 102 bestimmt. Die Vorhersage wird durch eine Abbildung, insbesondere mittels eines dafür trainierten künstlichen neuronalen Netzwerks bestimmt. Die Vorhersage ist ein prädizierter Datenframe. Der prädizierte Datenframe stellt die Vorhersage für den Zustand und/oder die Umgebung des Fahrzeugs 102 dar.

Ein verfügbarer Teil der Information über den Zustand und/oder die Umgebung des Fahrzeugs 102 und eine erste Vorhersage für einen nicht verfügbaren Teil der Information über den Zustand und/oder die Umgebung des Fahrzeugs 102 werden durch die Abbildung auf eine zweite Vorhersage für den Zustand und/oder die Umgebung des Fahrzeugs 102 abgebildet.

Wenn eine Eingabe eines Nutzers zur Verfügung steht, wird diese zusätzlich verwendet. Der zur Verfügung stehende Teil der Information über den Zustand und/oder die Umgebung des Fahrzeugs 102, die erste Vorhersage für den nicht verfügbaren Teil der Information über den Zustand und/oder die Umgebung des Fahrzeugs 102 und die Eingabe des Nutzers zum teleoperierten Fahren des Fahrzeugs 102 werden in diesem Fall durch die Abbildung auf die zweite Vorhersage abgebildet.

Anschließend wird ein Schritt 208 ausgeführt.

Im Schritt 208 wird die zweite Vorhersage für das teleoperierte Fahren ausgegeben. Im Beispiel wird abhängig vom prädizierten Datenframe ein Bild angezeigt.

Das Bild wird in einem Aspekt abhängig vom prädizierten Datenframe und unabhängig von der Information über die Umgebung des Fahrzeugs 102 und der Information über den Zustand des Fahrzeugs 102 bestimmt, mit der der Datenframe prädiziert wurde.

Das Bild wird in einem Aspekt abhängig vom prädizierten Datenframe und abhängig von der Information über die Umgebung des Fahrzeugs 102 und der Information über den Zustand des Fahrzeugs 102 bestimmt, mit der der Datenframe prädiziert wurde.

Das Bild wird in einem Aspekt abhängig vom prädizierten Datenframe und abhängig von der Information über die Umgebung des Fahrzeugs 102 und unabhängig von der Information über den Zustand des Fahrzeugs 102 bestimmt, mit der der Datenframe prädiziert wurde.

Das Bild wird in einem Aspekt abhängig vom prädizierten Datenframe und unabhängig von der Information über die Umgebung des Fahrzeugs 102 und abhängig von der Information über den Zustand des Fahrzeugs 102 bestimmt, mit der der Datenframe prädiziert wurde.

Anschließend wird ein Schritt 210 ausgeführt.

Im Schritt 210 wird die Eingabe des Nutzers erfasst. Die Eingabe des Nutzers kann in Erwiderung auf eine Ausgabe einer Vorhersage erfasst werden.

Die Eingabe des Nutzers kann die Soll-Geschwindigkeit, die Soll-Beschleunigung, der Soll-Lenkwinkel und/oder die Soll-Gierrate vorgeben. Die Eingabe des Nutzers kann die Soll-Pedalposition, den Soll-Gang, das Soll-Motormoment und/oder die Soll-Motordrehzahl vorgeben.

Anschließend wird ein Schritt 212 ausgeführt.

Im Schritt 212 wird die Eingabe des Nutzers vom Arbeitsplatz 100 zum Fahrzeug 102 übertragen.

Anschließend wird ein Schritt 214 ausgeführt.

Im Schritt 214 wird das Fahrzeug 102 abhängig von der Eingabe des Nutzers angesteuert. Im Beispiel wird die Aktorik 132 abhängig von der Eingabe des Nutzers angesteuert. Beispielsweise wird mit der Aktorik 132 die Soll-Geschwindigkeit, die Soll-Beschleunigung, der Soll-Lenkwinkel und/oder die Soll-Gierrate eingestellt. Es kann auch vorgesehen sein, dass der Aktorik 132 die Soll-Pedalposition, der Soll-Gang, das Soll-Motormoment und/oder die Soll-Motordrehzahl vorgegeben wird.

Die Übertragung der Information über die Umgebung des Fahrzeugs 102 und der Information über den Zustand des Fahrzeugs 102 sowie die Übertragung der Eingabe des Nutzers, d.h. die Paketströme und die Datenströme und die Datenframes und die Datensätze dazu, können wie beschrieben bestimmt werden. Die Übertragung kann auch auf andere Art und Weise erfolgen.

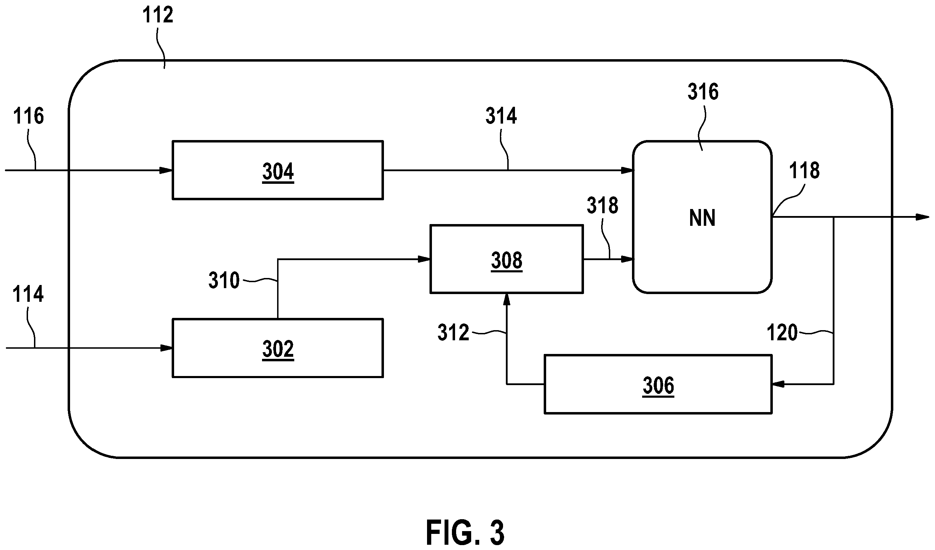

In Figur 3 ist eine Implementierung der Einrichtung 112 zur Prädiktion von Datenframes mit dem ersten Eingang 114, dem zweiten Eingang 116, dem dritten Eingang 120 und dem Ausgang 118 schematisch dargestellt. Die Einrichtung 112 umfasst einen ersten Speicher 302, einen zweiten Speicher 304, einen dritten Speicher 306 und einen vierten Speicher 308.

Der erste Speicher 302 ist ausgebildet, Daten aus einem Datenframe oder mehreren Datenframes, die am ersten Eingang 114 eintreffen, zu speichern. Der zweite Speicher 304 ist ausgebildet, Daten aus einem Datensatz oder mehreren Datensätzen, die am zweiten Eingang 116 eintreffen, zu speichern. Der dritte Speicher 306 ist ausgebildet, Daten aus einem prädizierten Datenframe oder mehreren prädizierten Datenframes, die am dritten Eingang 120 eintreffen, zu speichern.

Der vierte Speicher 308 ist über eine erste Datenverbindung 310 mit dem ersten Speicher 302 verbunden. Der vierte Speicher 308 ist über eine zweite Datenverbindung 312 mit dem dritten Speicher 306 verbunden. Der zweite Speicher 304 ist über eine dritte Datenverbindung 314 mit einem Eingang eines künstlichen neuronalen Netzwerks 316 verbunden. Der vierte Speicher 308 ist über eine vierte Datenverbindung 318 mit dem Eingang des künstlichen neuronalen Netzwerks 316 verbunden. Der Ausgang des künstlichen neuronalen Netzwerk 316 ist der Ausgang 118. Das künstliche neuronale Netzwerk 316 ist ausgebildet, einen Datensatz aus dem zweiten Speicher 304 und einen Datenframe aus dem vierten Speicher 308 auf einen prädizierten Datenframe am Ausgang 118 abzubilden. Der Eingang des künstlichen neuronalen Netzwerks 316 kann auch durch mehrere Datensätze aus dem zweiten Speicher 304 und einen Datenframe aus dem vierten Speicher 308 gebildet werden. Der Eingang des künstlichen neuronalen Netzwerks 316 kann auch durch einen Datensatz aus dem zweiten Speicher 304 und mehrere Datenframes aus dem vierten Speicher 308 gebildet werden. Der Eingang des künstlichen neuronalen Netzwerks 316 kann auch durch mehrere Datensätze aus dem zweiten Speicher 304 und mehrere Datenframes aus dem vierten Speicher 308 gebildet werden.

Der Ausgang 118 kann bei jeder dieser Ausführungen der Eingänge auch mehrere prädizierte Datenframes umfassen.

Die Einrichtung 112 ist ausgebildet, die jeweiligen Eingänge aus den jeweiligen Speichern bereitzustellen und den prädizierten Datenframe als Abbildung durch das künstliche neuronale Netzwerk 316 auszugeben.

Beispielsweise umfasst der erste Speicher 302 in einem Zeitpunkt t eine Reihe von Datenframes $F_{t-n}, ..., F_{t-2}, F_{t-1}$. Beispielsweise umfasst der zweite Speicher 304 im Zeitpunkt t eine Reihe von Datensätzen $I_{t-n}, ..., I_{t-2}, I_{t-1}, I_t$. Beispielsweise umfasst der dritte Speicher 306 im Zeitpunkt t eine Reihe von prädizierten Datenframes $F'_{t-n}, ..., F'_{t-2}, F'_{t-1}$. Beispielsweise umfasst der vierte Speicher 308 im Zeitpunkt t eine Reihe von Frames $S_{t-n}, ..., S_{t-2}, S_{t-1}$.

Eine Länge n der Reihen ist im Beispiel für alle Reihen gleich. Die Längen können sich auch unterscheiden.

Die Reihe von Frames $S_{t-n}, ..., S_{t-2}, S_{t-1}$ kann vollständig durch die Reihe von Datenframes $F_{t-n}, ..., F_{t-2}, F_{t-1}$ aus dem ersten Speicher 302 gebildet sein. Reihe von Datenframes $F_{t-n}, ..., F_{t-2}, F_{t-1}$ kann vollständig durch die Reihe von prädizierten Datenframes $F'_{t-n}, ..., F'_{t-2}, F'_{t-1}$ gebildet sein.

Vorzugsweise ist vorgesehen, dass die Reihe von Frames $S_{t-n}, ..., S_{t-2}, S_{t-1}$ teilweise Datenframes aus der Reihe von Datenframes $F_{t-n}, ..., F_{t-2}, F_{t-1}$ aus dem ersten Speicher 302 und teilweise Datenframes von prädizierten Datenframes $F'_{t-n}, ..., F'_{t-2}, F'_{t-1}$ aus dem dritten Speicher 306 umfasst.

Die Einrichtung 112 ist im Beispiel ausgebildet, wahlweise die jeweiligen Datenframes nur aus dem ersten Speicher 302 nur aus dem zweiten Speicher 306 oder sowohl aus dem ersten Speicher 302 und dem zweiten Speicher 306 auszuwählen und im vierten Speicher 308 als Eingang für das künstliche neuronale Netzwerk 316 abzuspeichern.

Im Folgenden wird eine Verwendung von echten Fahrzeugdaten am ersten Eingang 114 und Eingaben des Nutzers am zweiten Eingang 116 beschrieben. Die echte Fahrzeugdaten umfassen im Beispiel die Information über den Zustand des Fahrzeugs 102 und die Information über die Umgebung des Fahrzeugs. Die Eingaben des Nutzers umfassen im Beispiel die oben beschriebene Eingabe des Nutzers. Am Ausgang 118 werden diese Fahrzeugdaten und Eingaben des Nutzers auf prädizierte Fahrzeugdaten abgebildet. Diese prädizierten Fahrzeugdaten stellen synthetische Fahrzeugdaten für den dritten Eingang 120 dar.

Durch das zusätzliche Verwenden der Eingaben des Nutzers als Eingabe in das künstliche neuronale Netzwerk 316, durch die Prädiktion von prädizierten Fahrzeugdaten basierend auf vorherigen echten und/oder synthetischen Fahrzeugdaten und durch deren Auswahl wird es ermöglicht, das künstliche neuronale Netzwerk 316 für eine Prognose von Fahrzeugdaten sinnvoll im Kontext von teleoperierendem Fahren anzuwenden.

Insbesondere wird ermöglicht, dass die letzte Eingaben des Nutzers einen Einfluss auf die prädizierten Fahrzeugdaten hat. Dadurch wird die Qualität des teleoperierenden Fahrens signifikant besser.

Die echten Fahrzeugdaten werden durch prädizierte Fahrzeugdaten ergänzt. Dadurch werden hochaktuelle Daten, z.B. Videobilder und/oder Fahrzeugzustände, des Fahrzeuges 102 bereitgestellt, sodass dieses einfacher und sicherer von einem menschlichen Nutzer aus der Ferne gesteuert werden kann. So kann das Fahrzeug 102 ferngesteuert werden, wenn die tatsächliche Latenz zwischen dem Fahrzeug 102 und dem Arbeitsplatz 100 eine störende Größe erreicht. Diese Latenz wird durch die Prädiktion für den menschlichen Nutzer kompensiert.

Das künstliche neuronale Netzwerk 316 prädiziert im Beispiel einen Datenframe für den Zeitpunkt t, da die aktuellen Fahrzeugdaten, d.h. die im Zeitpunkt t im Fahrzeug 102 erfassten Fahrzeugdaten, dann noch nicht im Arbeitsplatz 100 verfügbar sind.

Der vierte Speicher 308 ist beispielsweise ein Puffer, das dem künstlichen neuronalen Netzwerk 316 die letzten n Datenframes bereitstellt. Es kann vorgesehen sein, dass soweit echte Fahrzeugdaten für die Zeiten $t_n$ bis $t_1$ vorliegen, diese verwendet werden. Anstelle von echten Fahrzeugdaten, die in einem Zeitschlitz $t_i$ fehlen kann vorgesehen sein, für den Zeitschlitz $t_i$ prädizierte Fahrzeugdaten aus dem dritten Speicher 306 einzusetzen. Die echten Fahrzeugdaten fehlen beispielsweise, wenn ihre Zustellung nicht oder noch nicht erfolgt ist.

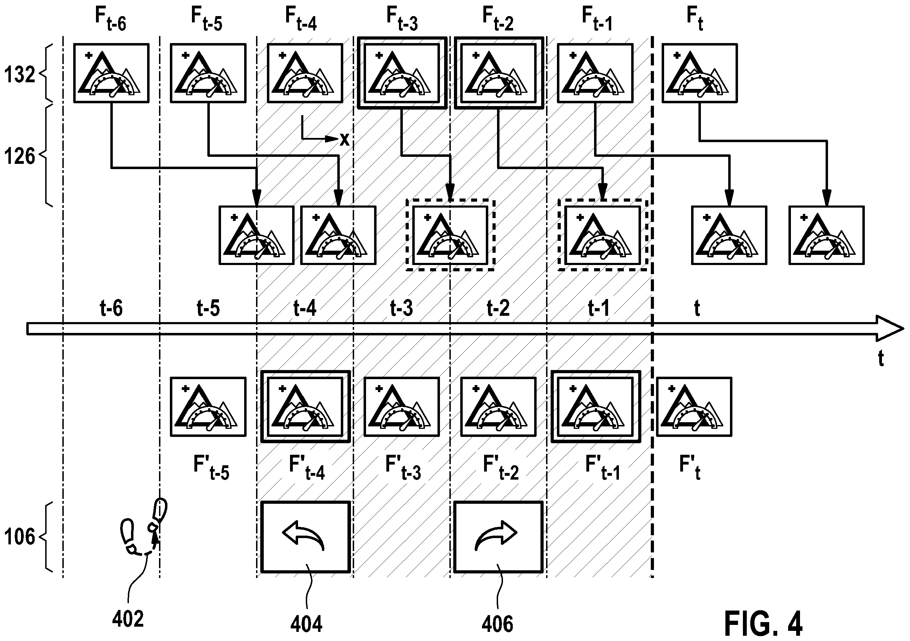

In Figur 4 ist ein Beispiel dargestellt, bei dem für eine Prädiktion von prädizierten Fahrzeugdaten im Zeitpunkt t die Fahrzeugdaten aus den Zeitschlitzen t-4 bis t-1 als Input genutzt werden.

Die Fahrzeugdaten sind z.B. die Datenframes aus dem Fahrzeug 102, die in den Zeitschlitzen t-3 und t-2 im Fahrzeug 102 bestimmt wurden. In den Zeitschlitzen t-6 bis t wird von der Sensorik 132 je ein Datenframe $F_{t-6}$, ..., $F_t$ erfasst. Aufgrund einer Latenz in der Datenübetragung über das Kommunikationsnetzwerk 126 erreicht der Datenframe $F_{t-6}$ den Arbeitsplatz 100 nach Beginn des Zeitschlitzes t-5 und vor Ende des Zeitschlitzes t-4. Aufgrund einer Latenz in der Datenübertragung über das Kommunikationsnetzwerk 126 erreicht der Datenframe $F_{t-5}$ den Arbeitsplatz 100 nach Beginn des Zeitschlitzes t-4 und vor Ende des Zeitschlitzes t-3. Aufgrund eines Fehlers in der Datenübetragung über das Kommunikationsnetzwerk 126 erreicht der Datenframe $F_{t-4}$ den Arbeitsplatz 100 nicht. Aufgrund einer Latenz in der Datenübertragung über das Kommunikationsnetzwerk 126 erreicht der Datenframe $F_{t-3}$ den Arbeitsplatz 100 nach Beginn des Zeitschlitzes t-3 und vor Ende des Zeitschlitzes t-2. Aufgrund einer Latenz in der Datenübertragung über das Kommunikationsnetzwerk 126 erreicht der Datenframe $F_{t-2}$ den Arbeitsplatz 100 während des Zeitschlitzes t-1. Aufgrund einer Latenz in der Datenübetragung über das Kommunikationsnetzwerk 126 erreicht der Datenframe $F_{t-1}$ den Arbeitsplatz 100 nach Beginn des Zeitschlitzes t. Aufgrund der Datenübetragung über das Kommunikationsnetzwerk 126 erreicht der Datenframe $F_t$ den Arbeitsplatz 100 nach dem Zeitschlitz t. Für die Zeitschlitze t-5 bis t liegen im Beispiel prädizierte Datenframes

$$F'_{t-5}, \dots, F'_{t-1}, F'_t$$

vor. Im Beispiel ist vorgesehen, den prädizierten Datenframe $F'_t$ abhängig von den Daten zu bestimmen, die für n=4 Zeitschlitze t-4 bis t vorliegen. Es kann eine andere Anzahl n von Zeitschlitzen für die Prädiktion eingesetzt werden.

Im Beispiel gibt der Nutzer über die Eingabeeinrichtung 106 zum Ende des Zeitschlitzes t-6 eine erste Eingabe 402 vor. Im Beispiel ist die erste Eingabe 402 ein Sollwert für das Gaspedal. Im Beispiel gibt der Nutzer während des Zeitschlitzes t-4 eine zweite Eingabe 404 vor. Im Beispiel ist die zweite Eingabe 404 ein Sollwert für eine Lenkbewegung nach links. Im Beispiel gibt der Nutzer während des Zeitschlitzes t-2 eine dritte Eingabe 406 vor. Im Beispiel ist die dritte Eingabe 406 ein Sollwert für eine Lenkbewegung nach rechts.

Für die Zeitschlitze t-3 und t-2 liegen im Beispiel für die Prädiktion echte Fahrzeugdaten vor. Für die beiden Zeitschlitze t-4 und t-1 werden im Beispiel die jeweils prädizierten Fahrzeugdaten verwendet. Die prädizierten Fahrzeugdaten sind in diesem Beispiel die Datenframes, aus dem dritten Speicher 306 für diese Zeitschlitze.

In diesem Ablauf werden die Eingaben, die der menschliche Nutzer in das System gibt auch direkt an das künstliche neuronale Netzwerk 316 gegeben. Dieses kann die Eingaben entsprechend verwenden, um die nächste Datenprädiktion so anzupassen, dass es zu den gerade getätigten Eingaben, z.B. Lenkbewegungen, passt. Folgende Eingaben stehen dem künstlichen neuronalen Netzwerk 316 im Zeitschritt t zur Verfügung.

Eingabe des Nutzers: Die Reihe von Datensätzen $I = I_{t-n}$, ..., $I_{t-2}$, $I_{t-1}$, $I_t$, die die Eingaben des Nutzers in das System innerhalb der letzten n Zeitschritte sowie im aktuellen Zeitschritt beschreiben. Die Eingaben des Nutzers liegen in diesem Aspekt unverzögert vor. Daher kann auch $I_t$ verwendet werden.

Fahrzeugdaten: Die Reihe von Datenframes F = $F_{t-n}$, ..., $F_{t-2}$, $F_{t-1}$ beschreibt die übertragenen Daten des Fahrzeugs aus den letzten n Zeitschritten, sofern sie bereits empfangen wurden. Zu den Fahrzeugdaten zählen beispielsweise auch Daten der Umfeldsensorik, z.B. Video, aber auch Bewegungs- und Statusdaten des Fahrzeugs 102, die für eine bestmögliche Prädiktion des nächsten Datenframes benötigt werden.

Prädizierte Fahrzeugdaten: Die Reihe von prädizierten Datenframes $F' = F'_{t-n}, ..., F'_{t-2}, F'_{t-1}$ beschreibt die Daten, die das künstliche neuronale Netzwerk 316 auf Basis von *I, F* und *F'* in den letzten n Zeitschritten generiert hat. $F_0$ sind die synthetisch erstellten Daten, welche das künstliche neuronale Netzwerk 316 für Zeitschritt t berechnet hat und welche dem Nutzer zum Zeitschritt t angezeigt werden.

Puffer: Die Reihe von Frames S = $S_{t-n}$, ... , $S_{t-2}$, $S_{t-1} = \{F_i | F_i \neq NIL\} \cup \{F'_i | F_i == NIL\}$ beschreibt den Inhalt des Puffers für das künstliche neuronale Netzwerk 316 zum Zeitpunkt t. Dieser enthält für einen zurückliegenden Zeitpunkt i entweder $S_i = F_i$, falls diese echten Fahrzeugdaten aus dem Fahrzeug 102 bereits empfangen wurden und ansonsten die prädizierten Fahrzeugdaten $S_i = F'_i$.

Das Alter der Fahrzeugdaten ist entscheidend für die Kompensation der Latenz. Die Fahrzeugdaten werden daher vorzugsweise mit einem Zeitstempel versehen. Hierzu werden eine Uhr, die die Zeit für den Zeitstempel im Fahrzeug 102 vorgibt und eine Uhr, die für die Auswertung des Zeitstempels im Arbeitsplatz 100 eingesetzt wird, synchronisiert oder weisen eine bekannte Differenz auf, die eine Umrechnung der Zeit aus dem Zeitstempel erlaubt. Der resultierende Zeitfehler ist vorzugsweise klein, z.B. kleiner als 5 Millisekunden. Dies wird z.B. dadurch erreicht, dass das Fahrzeug 102 und der Arbeitsplatz 100 jeweils eine Uhrzeit mittels GNSS, z.B. GPS, bestimmt. Dadurch ist eine ausreichende Synchronisation gewährleistet.

Die Sensorik 132 im Fahrzeug 102 kann alternativ oder zusätzlich zu Video auch andere Umfeldsensorik umfassen, z.B. Radar, Lidar, Infrarot, Car-2-X-Kommunikation. Es kann vorgesehen sein, zusätzlich zu Video einen oder mehrere Sensorerfassungen der Sensorik 132 zu verarbeiten. Diese werden dann ebenfalls als Eingabe in das künstliche neuronale Netzwerk 316 genutzt und können so ebenfalls prädiziert werden, um Latenzen zu kompensieren.

Es kann vorgesehen sein, dass die Prädiktion entfällt, wenn die Sensordaten der Sensorik 132 eine niedrige Latenz aufweisen und nur dann Prädiktionen berechnet werden, wenn Fahrzeugdaten zu stark verzögert werden, um sie direkt anzuzeigen.

Es kann vorgesehen sein, die Prädiktion so zu erweitern, dass für die Eingaben des Nutzers berücksichtigt wird, welche Latenz die Eingaben erfahren bis eine Wirkung auf das Fahrzeug 102 eintritt. Dies erhöht die Verzögerung, bis der Nutzer die Auswirkungen seiner Eingaben wahrnimmt, aber erzeugt realitätsnähere Prädiktionen.

Das Verfahren kann auch in zeitkontinuierlichen Systemen eingesetzt werden. Die Daten können eindeutig mit Zeitstempeln markiert sein und die Unterteilung in Zeitschlitze kann entfallen. In diesem Fall ist es insbesondere möglich, dass die Datenerfassung im Fahrzeug 102 und die Anzeige im Arbeitsplatz 100 nicht gleichgetaktet sind. Es kann eine strikte Bündelung aller Fahrzeugdaten eines Zeitschlitzes in einem Datenframe vorgesehen sein. Diese Bündelung kann auch entfallen. Fahrzeugdaten verschiedener Sensorik 132 können auch separat gesendet werden. Dadurch wird es möglich, dass Fahrzeugdaten mit niedriger Latenz, beispielsweise aufgrund von Hardware mit geringerer Verarbeitungsdauer oder aufgrund niedrigerer Datenmenge, schneller im Arbeitsplatz 100 ankommen und dort bevorzugt verwendet werden können, um die Prädiktion zu verbessern. Ein Beispiel für Fahrzeugdaten mit niedriger Latenz sind beispielsweise die Geschwindigkeit, der Lenkwinkel oder Radardaten. Währenddessen können andere Fahrzeugdaten mit höherer Latenz noch für die Prädiktion fehlen und durch vorher prädizierte Daten ersetzt werden. Ein Beispiel für Daten höherer Latenz sind Videodaten. Durch die Entkopplung verschiedener Arten von Daten kann das Prädiktionsergebnis und damit die Sicherheit des teleoperierten Fahrens verbessert werden.

Es kann vorgesehen sein, dass zuvor prädizierte Fahrzeugdaten in einem Zeitschlitz statt der echten Fahrzeugdaten verwendet werden, wenn diese nicht verfügbar sind und echte Fahrzeugdaten, diese prädizierten Fahrzeugdaten dann ersetzen, wenn diese echten Fahrzeugdaten vom Fahrzeug 102 eintreffen.

Ein Training des künstlichen neuronalen Netzwerks 316 wird beispielweise mit folgenden Arten von Trainingsdaten durchgeführt.

Training ohne Verwendung prädizierter Datenframes:
Eingangsdaten für den ersten Eingang 114: Datenframe, der zum Zeitpunkt t-1 im Fahrzeug 102 bestimmt wird, ..., Datenframe der zum Zeitpunkt t-N im Fahrzeug 102 bestimmt wird.

Goldstandard für den Ausgang 118: Datenframe der zum Zeitpunkt t im Fahrzeug 102 bestimmt wird.

Training mit Verwendung prädizierter Datenframes:
Eingangsdaten für den ersten Eingang 114: Datenframe, der zum Zeitpunkt t-1 im Fahrzeug 102 bestimmt wird, ..., Datenframe der im Zeitpunkt t-i aus den Datenframes oder prädizierten Datenframes der Zeitpunkte t-1 bis t-i-1 im Puffer prädiziert wurde, ..., Datenframe der zum Zeitpunkt t-N im Fahrzeug 102 bestimmt wird.

Goldstandard für den Ausgang 118: Datenframe der zum Zeitpunkt t im Fahrzeug 102 bestimmt wird.

Es kann auch eine Mischform beider Arten vorgesehen sein, bei der mit im Fahrzeug 102 bestimmten Datenframes für Zeitpunkte t-1 bis t-N trainiert wird, jedoch beliebige, z.B. zufällig gewählte, dieser Datenframes durch prädizierte Datenframes ausgetauscht werden.

In beiden Fällen kann vorgesehen sein, die Eingabe des Nutzers zu berücksichtigen. Dazu werden z.B. Trainingsdaten für den zweiten Eingang 116 eingesetzt, die abhängig von Fahrereingaben im Fahrzeug 102 bestimmt werden, die zu den Zeitpunkten t-1, ..., t-N im Fahrzeug 102 erfasst werden.

**Patentansprüche**

1. Verfahren für teleoperiertes Fahren, wobei ein Fahrzeug (102) abhängig von einer Eingabe eines Nutzers angesteuert wird, wobei eine erste Vorhersage für einen nicht verfügbaren Teil einer Information über einen Zustand und/oder eine Umgebung des Fahrzeugs (102) bestimmt wird, wobei ein verfügbarer Teil der Information über den Zustand und/oder die Umgebung des Fahrzeugs (102) und die erste Vorhersage durch eine Abbildung auf eine zweite Vorhersage für den Zustand und/oder die Umgebung des Fahrzeugs (102) abgebildet werden (206), und die zweite Vorhersage für das teleoperierte Fahren ausgegeben wird (208), wobei eine Kommunikationseinrichtung (108) einen ersten Paketstrom empfängt und daraus einen ersten Datenstrom bestimmt,
**dadurch gekennzeichnet,**

   **dass** eine Dekodiereinrichtung (110) aus dem ersten Datenstrom Datenframes bestimmt, die Daten eines Bildes umfassen,
   **dass** die Daten aus einem oder mehreren der Datenframes an einem ersten Eingang (114) einer Einrichtung (112) zur Vorhersage von Datenframes eintreffen und in einem ersten Speicher (302) gespeichert werden,
   **dass** Daten, die aus einem Datensatz oder mehreren Datensätzen abhängig von der Eingabe des Nutzers bestimmt werden, an einem zweiten Eingang (116) eintreffen und in einem zweiten Speicher (304) gespeichert werden,
   **dass** Daten aus einem prädizierten Datenframe oder mehreren prädizierten Datenframes an einem dritten Eingang (120) der Einrichtung (112) eintreffen und in einem dritten Speicher (306) gespeichert werden, dass ein künstliches neuronales Netzwerk (316) der Einrichtung (112) einen Datensatz aus dem zweiten Speicher (304) und einen Datenframe aus einem vierten Speicher (308) auf einen prädizierten Datenframe an einem Ausgang (118) abbildet,

   **dass** der vierte Speicher (308)

      - über eine erste Datenverbindung (310) mit dem ersten Speicher (302) verbunden ist,
      - über eine zweite Datenverbindung (312) mit dem dritten Speicher (306) verbunden ist und über eine vierte Datenverbindung (318) mit dem Eingang des künstlichen neuronalen Netzwerks (316) verbunden ist, und

   **dass** der zweite Speicher (304) über eine dritte Datenverbindung (314) mit einem Eingang des künstlichen neuronalen Netzwerks (316) verbunden ist, an dessen Ausgang (118) der prädizierte Datenframe ausgegeben wird.

2. Verfahren nach Anspruch 1, **dadurch gekennzeichnet, dass** die Information über den Zustand und/oder die Umgebung des Fahrzeugs (102) die erste Vorhersage und eine Eingabe eines Nutzers zum teleoperierten Fahren des Fahrzeugs (102) durch die Abbildung auf die zweite Vorhersage abgebildet werden (206).

3. Verfahren nach einem der vorherigen Ansprüche, **dadurch gekennzeichnet, dass** die Eingabe des Nutzers in Erwiderung auf eine Ausgabe einer Vorhersage erfasst wird (210).

4. Verfahren nach einem der Ansprüche 2 oder 3, **dadurch gekennzeichnet, dass** die Eingabe des Nutzers eine Soll-Geschwindigkeit, eine Soll-Beschleunigung, einen Soll-Lenkwinkel und/oder eine Soll-Gierrate, eine Soll-Pedalposition, einen Soll-Gang, ein Soll-Motormoment und/oder eine Soll-Motordrehzahl vorgibt.

5. Verfahren nach einem der vorherigen Ansprüche, **dadurch gekennzeichnet, dass** die Information über den Zustand und/oder die Umgebung des Fahrzeugs (102) mehrere Größen umfasst, wobei die erste Vorhersage für einen ersten Teil der Größen der Information über den Zustand und/oder die Umgebung des Fahrzeugs (102) bestimmt wird, und wobei ein zweiter Teil der Größen der Information über den Zustand und/oder die Umgebung des Fahrzeugs (102) vom Fahrzeug (102) empfangen wird.

6. Verfahren nach einem der vorherigen Ansprüche, **dadurch gekennzeichnet, dass** die Information über den Zustand und/oder die Umgebung des Fahrzeugs (102) für mehrere verschiedene Zeitpunkte vom Fahrzeug (102) empfangen wird, wobei die Information über den Zustand und/oder die Umgebung des Fahrzeugs (102) für die mehreren verschiedenen Zeitpunkte durch die Abbildung auf die zweite Vorhersage abgebildet wird.

7. Verfahren nach einem der vorherigen Ansprüche, **dadurch gekennzeichnet, dass** die Eingabe des Nutzers für mehrere verschiedene Zeitpunkte erfasst wird, wobei die Eingabe für die mehreren verschiedenen Zeitpunkte durch die Abbildung auf die zweite Vorhersage abgebildet wird.

**8.** Vorrichtung zum teleoperierten Fahren eines Fahrzeugs, **dadurch gekennzeichnet, dass** die Vorrichtung ausgebildet ist, das Verfahren nach einem der Ansprüche 1 bis 7 auszuführen.

**Claims**

**1.** Method for teleoperated driving, wherein a vehicle (102) is controlled on the basis of an input from a user, wherein a first prediction for an unavailable portion of information about a state and/or surroundings of the vehicle (102) is determined, wherein an available portion of the information about the state and/or the surroundings of the vehicle (102) and the first prediction are mapped (206) onto a second prediction for the state and/or the surroundings of the vehicle (102) by a mapping, and the second prediction is output (208) for the teleoperated driving, a communication device (108) receiving a first packet stream and determining a first data stream therefrom,
**characterized**

in that a decoding device (110) takes the first data stream and determines data frames that comprise data relating to an image, in that the data from one or more of the data frames arrive at a first input (114) of a device (112) for predicting data frames and are stored in a first memory (302),
**in that** data that are determined from a dataset or multiple datasets on the basis of the input from the user arrive at a second input (116) and are stored in a second memory (304),
**in that** data from a predicted data frame or multiple predicted data frames arrive at a third input (120) of the device (112) and are stored in a third memory (306), in that an artificial neural network (316) of the device (112) maps a dataset from the second memory (304) and a data frame from a fourth memory (308) onto a predicted data frame at an output (118),
**in that** the fourth memory (308)

- is connected via a first data connection (310) to the first memory (302),
- is connected via a second data connection (312) to the third memory (306) and is connected via a fourth data connection (318) to the input of the artificial neural network (316),

and **in that** the second memory (304) is connected via a third data connection (314) to an input of the artificial neural network (316), the output (118) of which outputs the predicted data frame.

**2.** Method according to Claim 1, **characterized in that** the information about the state and/or the surroundings of the vehicle (102), the first prediction and an input from a user for the teleoperated driving of the vehicle (102) are mapped (206) onto the second prediction by the mapping.

**3.** Method according to either of the preceding claims, **characterized in that** the input from the user is logged (210) in response to an output of a prediction.

**4.** Method according to either of Claims 2 and 3, **characterized in that** the input from the user specifies a setpoint velocity, a setpoint acceleration, a setpoint steering angle and/or a setpoint yaw rate, a setpoint pedal position, a setpoint gear, a setpoint engine torque and/or a setpoint engine speed.

**5.** Method according to one of the preceding claims, **characterized in that** the information about the state and/or the surroundings of the vehicle (102) comprises multiple variables, the first prediction being determined for a first portion of the variables of the information about the state and/or the surroundings of the vehicle (102), and a second portion of the variables of the information about the state and/or the surroundings of the vehicle (102) being received from the vehicle (102).

**6.** Method according to one of the preceding claims, **characterized in that** the information about the state and/or the surroundings of the vehicle (102) is received from the vehicle (102) for multiple different times, the information about the state and/or the surroundings of the vehicle (102) for the multiple different times being mapped onto the second prediction by the mapping.

**7.** Method according to one of the preceding claims, **characterized in that** the input from the user is logged for multiple different times, the input for the multiple different times being mapped onto the second prediction by the mapping.

**8.** Apparatus for teleoperated driving of a vehicle, **characterized in that** the apparatus is designed to carry out the method according to one of Claims 1 to 7.

**Revendications**

**1.** Procédé de conduite téléopérée, dans lequel un véhicule (102) est piloté en fonction d'une entrée d'un utilisateur, dans lequel une première prédiction est déterminée pour une partie indisponible d'une information concernant un état et/ou un environnement du véhicule (102), dans lequel une partie disponible de l'information concernant l'état et/ou l'environnement du véhicule (102) et la première prédiction sont mappés (206) par un mappage sur une deuxième prédiction pour l'état et/ou l'environnement du véhicule (102), et la deuxième prédiction est sortie pour la conduite téléopérée (208), dans lequel un dispositif de communication (108) reçoit un premier flux de paquets et détermine un premier flux de données à partir de celui-ci, **caractérisé**

**en ce qu'**un dispositif de décodage (110) détermine à partir du premier flux de données des trames de données qui comprennent les données d'une image, en ce que les données issues d'une ou de plusieurs des trames de données arrivent à une première entrée (114) d'un dispositif (112) de prédiction de trames de données et sont mémorisées dans une première mémoire (302), en ce que des données qui sont déterminées à partir d'un jeu de données ou de plusieurs jeux de données en fonction de l'entrée de l'utilisateur arrivent à une deuxième entrée (116) et sont mémorisées dans une deuxième mémoire (304),

**en ce que** des données issues d'une trame de données prédite ou de plusieurs trames de données prédites arrivent à une troisième entrée (120) du dispositif (112) et sont mémorisées dans une troisième mémoire (306), en ce qu'un réseau neuronal artificiel (316) du dispositif (112) mappe un jeu de données de la deuxième mémoire (304) et une trame de données d'une quatrième mémoire (308) sur une trame de données prédite au niveau d'une sortie (118), **en ce que** la quatrième mémoire (308)

- est reliée à la première mémoire (302) par une première liaison de données (310),
- est reliée à la troisième mémoire (306) par une deuxième liaison de données (312) et est reliée à l'entrée du réseau neuronal artificiel (316) par une quatrième liaison de données (318),

et **en ce que** la deuxième mémoire (304) est reliée par une troisième liaison de données (314) à une entrée du réseau neuronal artificiel (316) à la sortie (118) duquel est sortie la trame de données prédite.

2. Procédé selon la revendication 1, **caractérisé en ce que** l'information concernant l'état et/ou l'environnement du véhicule (102), la première prédiction et une entrée d'un utilisateur sont mappés (206) pour la conduite téléopérée du véhicule (102) par le mappage sur la deuxième prédiction.

3. Procédé selon l'une quelconque des revendications précédentes, **caractérisé en ce que** l'entrée de l'utilisateur est détectée (210) en réponse à une sortie d'une prédiction.

4. Procédé selon l'une quelconque des revendications 2 ou 3, **caractérisé en ce que** l'entrée de l'utilisateur spécifie une vitesse de consigne, une accélération de consigne, un angle de braquage de consigne et/ou un taux de lacet de consigne, une position de pédale de consigne, un rapport de consigne, un couple moteur de consigne et/ou une vitesse de rotation de moteur de consigne.

5. Procédé selon l'une quelconque des revendications précédentes, **caractérisé en ce que** l'information concernant l'état et/ou l'environnement du véhicule (102) comprend plusieurs grandeurs, dans lequel la première prédiction est déterminée pour une première partie des grandeurs de l'information concernant l'état et/ou l'environnement du véhicule (102), et dans lequel une deuxième partie des grandeurs de l'information concernant l'état et/ou l'environnement du véhicule (102) est reçue du véhicule (102).

6. Procédé selon l'une quelconque des revendications précédentes, **caractérisé en ce que** l'information concernant l'état et/ou l'environnement du véhicule (102) est reçue du véhicule (102) pour plusieurs instants différents, dans lequel l'information concernant l'état et/ou l'environnement du véhicule (102) est mappée pour les plusieurs instants différents par le mappage sur la deuxième prédiction.

7. Procédé selon l'une quelconque des revendications précédentes, **caractérisé en ce que** l'entrée de l'utilisateur est détectée pour plusieurs instants différents, dans lequel l'entrée pour les plusieurs instants différents est mappée par le mappage sur la deuxième prédiction.

8. Dispositif de conduite téléopérée d'un véhicule, **caractérisé en ce que** le dispositif est réalisé pour exécuter le procédé selon l'une quelconque des revendications 1 à 7.

FIG. 1

**FIG. 2**

**FIG. 3**

$F_t$  $F_{t-1}$  $F_{t-2}$  $F_{t-3}$  $F_{t-4}$  $F_{t-5}$  $F_{t-6}$

t  t-1  t-2  t-3  t-4  t-5  t-6

$F'_t$  $F'_{t-1}$  $F'_{t-2}$  $F'_{t-3}$  $F'_{t-4}$  $F'_{t-5}$

406  404  402

132  126  106

x

t

**FIG. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009136969 A2

- US 2020324761 A1

**In der Beschreibung aufgeführte Nicht-Patentliteratur**

- **HOSSEINI AMIN et al.** Predictive Haptic Feedback for Safe Lateral Control of Teleoperated Raad Vehicles in Urban Areas. *2016 IEEE 83RD VEHICULAR TECHNOLOGY CONFERENCE (VTC SPRING)*